# EUROPEAN PATENT APPLICATION

(11) **EP 2 415 964 A1**
(43) Date of publication of application: **08.02.2012**
(21) Application number: 10761373.9
(22) Date of filing: 29.03.2010
(51) Int. Cl.: F01C 21/18, F01C 20/26, F01C 20/28, F01K 23/06, F02G 5/02

(54) **FLUID MACHINE, AND REFRIGERANT CIRCUIT AND WASTE HEAT UTILIZATION DEVICE USING THE FLUID MACHINE**

(30) Priority: 30.03.2009 JP 2009081838
(71) Applicant: Sanden Corporation, Isesaki-shi Gunma 372-8502 (JP)
(72) Inventor: WADA, Hirofumi, Isesaki-shi Gunma 372-8502 (JP)
(74) Representative: Grünecker, Kinkeldey, Stockmair & Schwanhäusser
(86) International application number: PCT/JP2010/002259
(87) International publication number: WO 2010/116667

(57) **Abstract**

[Purpose] To provide a fluid machine, and a refrigerant circuit and a waste heat utilization device using the fluid machine, whereby the size and cost of a Rankine circuit and thus of the waste heat utilization device can be reduced while preventing an abnormally high pressure from being developed in the Rankine circuit and also improving starting performance of the Rankine circuit.

[Means for Attaining the Purpose]

A waste heat utilization device (1) is provided with a Rankine circuit (4) including a fluid machine (10). The fluid machine (10) includes, inside a housing thereof, a drive section (22) configured to be driven by a working fluid introduced from an inlet port (33) and to discharge the working fluid to an outlet port (45), a communication passage (102) allowing the working fluid to flow from the inlet port into the drive section, a bypass passage (104) allowing the working fluid to flow from the inlet port to the outlet port while bypassing the drive section, and a valve mechanism (106, 112, 124) configured to block inflow of the working fluid from the inlet port and to allow the inlet port to be connected selectively to the communication passage and the bypass passage.

## Description

### Technical Field

The present invention relates to a fluid machine, and a refrigerant circuit and a waste heat utilization device using the fluid machine.

### Background Art

A waste heat utilization device of this type is provided with a Rankine circuit including an expander which is inserted in a circulation path for circulating a working fluid to produce a drive force by expanding the working fluid whose pressure has been increased by the waste heat of a heat source. The Rankine circuit further includes a high-pressure path section which forms part of the circulation path and in which a high working fluid pressure on the inlet port side of the expander prevails, a low-pressure path section which forms part of the circulation path and in which a low working fluid pressure on the outlet port side of the expander prevails, and pressure holding means for holding the pressure in the high-pressure path section while the operation of the Rankine circuit is stopped.

Also, a technique has been disclosed in which three valves are inserted in the circulation path, the valves including an on-off valve (shutoff valve) for accumulating pressure in the high-pressure path section, a control valve (pressure regulating valve) for regulating the pressure in the high-pressure path section, and a relief valve (bypass valve) for releasing abnormally high pressure from the high-pressure path section. The valves are controlled so as to prevent abnormally high pressure from being developed in the high-pressure path section while the Rankine circuit is stopped, and also to improve the starting performance of the Rankine circuit (see Patent Document 1, for example).

An expander has also been known which is provided with high- and low-pressure sections for a working fluid, a drive section, a communication passage directly connecting the high- and low-pressure sections to each other while bypassing the drive section, and opening/closing means (bypass valve) for opening and closing the communication passage (see Patent Document 2, for example).

### Prior Art Literature

### Patent Documents

Patent Document 1: Japanese Laid-open Patent Publication No. 2007-9897
Patent Document 2: Japanese Laid-open Patent Publication No. 2007-231855

### Summary of the Invention

### Problems to be Solved by the Invention

In Patent Document 1, the three valves (shutoff valve, pressure regulating valve, and bypass valve) are inserted in the circulation path, with the result that the Rankine circuit is complicated in construction.

The three valves may conceivably be arranged within the expander, like the opening/closing means (bypass valve) disclosed in Patent Document 2. This, however, leads to complicated structure of the expander, and a problem still arises in that the size and cost of the expander and the Rankine circuit and thus of the waste heat utilization device cannot be reduced.

The present invention was created in view of the above circumstances, and an object thereof is to provide a fluid machine, and a refrigerant circuit and a waste heat utilization device using the fluid machine, whereby the size and cost of a Rankine circuit and thus of the waste heat utilization device can be reduced while preventing an abnormally high pressure from being developed in the Rankine circuit and also improving starting performance of the Rankine circuit.

### Means for Solving the Problems

To achieve the object, the present invention provides a fluid machine comprising, inside a housing thereof: a drive section configured to be driven by a working fluid introduced from an inlet port of the fluid machine, and to discharge the working fluid to an outlet port of the fluid machine; a communication passage allowing the working fluid to flow from the inlet port into the drive section; a bypass passage allowing the working fluid to flow from the inlet port to the outlet port while bypassing the drive section; and a valve mechanism configured to block inflow of the working fluid from the inlet port and to allow the inlet port to be connected selectively to the communication passage and the bypass passage (claim 1).

The present invention also provides a refrigerant circuit comprising the fluid machine of claim 1 inserted in a circulation path for circulating the working fluid (claim 2).

Further, the present invention provides a waste heat utilization device comprising, as the refrigerant circuit of claim 2, a Rankine circuit including an expansion unit inserted in the circulation path, the expansion unit being contained in the housing of the fluid machine and configured to produce drive force by causing the drive section to expand the working fluid whose pressure has been increased by waste heat of a heat source, wherein the Rankine circuit further includes a high-pressure path section which is connected to the inlet port and in which high pressure of the working fluid circulated through the circulation path prevails, a low-pressure path section which is connected to the outlet port and in which low pressure of the working fluid circulated through the circulation path prevails, and pressure holding means for holding the pressure in the high-pressure path section, and wherein, when the pressure holding means is in operation, the valve mechanism blocks the inflow of the working fluid from the inlet port, and when the pressure in the high-pressure path section is higher than or equal to a first preset pressure, the valve mechanism allows the inflow of the working fluid from the inlet port and connects the inlet port to the bypass passage or the communication passage (claim 3).

Preferably, when the Rankine circuit is in operation, the valve mechanism connects the inlet port to the communication passage, when the Rankine circuit is stopped, the valve mechanism operates the pressure holding means to block the inflow of the working fluid from the inlet port, when the pressure in the high-pressure path section is higher than or equal to the first preset pressure, the valve mechanism allows the inflow of the working fluid from the inlet port and connects the inlet port to the bypass passage or the communication passage, and when the Rankine circuit is restarted after being stopped, the valve mechanism connects the inlet port to the communication passage (claim 4).

Preferably, when the Rankine circuit is in operation, the valve mechanism connects the inlet port to the communication passage, when the pressure in the high-pressure path section is lower than a second preset pressure during the operation of the Rankine circuit, the valve mechanism operates the pressure holding means to block the inflow of the working fluid from the inlet port, and when the pressure in the high-pressure path section is higher than or equal to a third preset pressure, the valve mechanism allows the inflow of the working fluid from the inlet port and connects the inlet port to the communication passage (claim 5).

Preferably, when the pressure in the high-pressure path section is higher than or equal to the first preset pressure, the valve mechanism allows the inflow of the working fluid from the inlet port and connects the inlet port only to the bypass passage (claim 6).

The valve mechanism preferably includes a valve element which allows the inlet port to selectively communicate with the communication passage and the bypass passage and on which the high pressure of the working fluid in the inlet port acts, and a spring mechanism supporting the valve element and pressing the valve element against the high pressure of the working fluid, to block and allow the inflow of the working fluid from the inlet port (claim 7).

Preferably, the spring mechanism includes a spring pushing the valve element, and an accommodation chamber accommodating the spring and sealed in a gastight fashion with respect to the inlet port (claim 8).

Preferably, the accommodation chamber communicates with the outlet port, and when a force exerted on the valve element by the high pressure of the working fluid in the inlet port is larger than a sum of a force exerted by the low pressure of the working fluid in the outlet port and a pushing force exerted by the spring, the spring mechanism allows the inflow of the working fluid from the inlet port and connects the inlet port to the bypass passage (claim 9).

Preferably, the accommodation chamber is open to atmosphere, and when a force exerted on the valve element by the high pressure of the working fluid in the inlet port is larger than a sum of a force exerted by an atmospheric pressure and a pushing force exerted by the spring, the spring mechanism allows the inflow of the working fluid from the inlet port and connects the inlet port to the bypass passage (claim 10).

Preferably, the valve element is a ball valve element or a rotary valve element and is rotated by a predetermined drive source (claim 11).

### Advantageous Effects of the Invention

The fluid machine according to claim 1 includes, inside the housing thereof, the valve mechanism configured to block the inflow of the working fluid from the inlet port and to allow the inlet port to be connected selectively to the communication passage and the bypass passage. Since the fluid machine is equipped with the valve mechanism having multiple functions, the construction of the fluid machine can be simplified.

The refrigerant circuit according to claim 2 is provided with the fluid machine of claim 1 which is inserted in the circulation passage for circulating the working fluid. Since the refrigerant circuit need not be equipped with a valve for blocking and allowing the inflow of the working fluid or a valve for switching between the communication passage and the bypass passage, the construction of the refrigerant circuit can be simplified.

In the waste heat utilization device according to claim 3, when the pressure holding means is in operation, the valve mechanism blocks the inflow of the working fluid from the inlet port, and when the pressure in the high-pressure path section is higher than or equal to the first preset pressure, the valve mechanism allows the inflow of the working fluid from the inlet port and connects the inlet port to the bypass passage or the communication passage. Thus, the fluid machine is equipped with the valve mechanism which is single in number but is capable of functioning as three different valves, namely, a shutoff valve for accumulating pressure in the high-pressure path section, a pressure regulating valve for regulating the pressure in the high-pressure path section to prevent the pressure from becoming abnormally high, and a bypass valve for releasing abnormally high pressure of the working fluid when the pressure in the Rankine circuit is abnormally high. Accordingly, the size and cost of the Rankine circuit and thus of the waste heat utilization device can be reduced while preventing the pressure in the Rankine circuit from becoming abnormally high and also improving the starting performance of the Rankine circuit.

In the waste heat utilization device according to claim 4, when the Rankine circuit is in operation, the valve mechanism connects the inlet port to the communication passage, when the Rankine circuit is stopped, the valve mechanism operates the pressure holding means to block the inflow of the working fluid from the inlet port, when the pressure in the high-pressure path section is higher than or equal to the first preset pressure, the valve mechanism allows the inflow of the working fluid from the inlet port and connects the inlet port to the bypass passage or the communication passage, and when the Rankine circuit is restarted after being stopped, the valve mechanism connects the inlet port to the communication passage. Thus, while the Rankine circuit is stopped, the pressure is accumulated in the high-pressure path section and at the same time is prevented from becoming abnormally high, and when the Rankine circuit is restarted, the pressure of the working fluid accumulated in the high-pressure path section is used to start the Rankine circuit.

In the waste heat utilization device according to claim 5, when the Rankine circuit is in operation, the valve mechanism connects the inlet port to the communication passage, when the pressure in the high-pressure path section is lower than the second preset pressure during the operation of the Rankine circuit, the valve mechanism operates the pressure holding means to block the inflow of the working fluid from the inlet port, and when the pressure in the high-pressure path section is higher than or equal to the third preset pressure, the valve mechanism allows the inflow of the working fluid from the inlet port and connects the inlet port to the communication passage. Thus, the pressure of the working fluid is accumulated in the high-pressure path section until an appropriate high pressure is reached, and when the working fluid pressure in the high-pressure path section becomes equal to the appropriate high pressure, the inlet port is connected to the communication passage. The working fluid pressure in the high-pressure path section of the Rankine circuit can therefore be kept at the appropriate high pressure.

In the waste heat utilization device according to claim 6, when the pressure in the high-pressure path section is higher than or equal to the first preset pressure, the valve mechanism allows the inflow of the working fluid from the inlet port and connects the inlet port only to the bypass passage. Thus, the working fluid of which the pressure is abnormally high is prevented from flowing into the communication passage and driving the drive section at high speed, whereby seizure of the drive section due to such high-speed operation can be avoided. The expansion unit, the Rankine circuit and thus the waste heat utilization device can be reliably protected, improving the reliability of the waste heat utilization device.

In the waste heat utilization device according to claim 7, the valve mechanism includes the valve element which allows the inlet port to selectively communicate with the communication passage and the bypass passage and on which the high pressure of the working fluid in the inlet port acts, and the spring mechanism supporting the valve element and pressing the valve element against the high pressure of the working fluid, to block and allow the inflow of the working fluid from the inlet port. Thus, the valve mechanism has a simple construction. Also, since the inlet port is opened and closed by mechanical means, the abnormally high pressure can be quickly released, making it possible to further improve the reliability of the waste heat utilization device.

In the waste heat utilization device according to claim 8, the spring mechanism includes the spring pushing the valve element, and the accommodation chamber accommodating the spring and sealed in a gastight fashion with respect to the inlet port. In this manner, the spring mechanism has a simple construction.

In the waste heat utilization device according to claim 9, the accommodation chamber communicates with the outlet port, and when the force exerted on the valve element by the high pressure of the working fluid in the inlet port is larger than the sum of the force exerted by the low pressure of the working fluid in the outlet port and the pushing force exerted by the spring, the spring mechanism allows the inflow of the working fluid from the inlet port and connects the inlet port to the bypass passage. Thus, the abnormally high pressure in the high-pressure path section can be released in accordance with the pressure difference between the inlet and outlet ports, that is, between the high and low pressures of the working fluid (relative pressure control). Accordingly, not only variations in the high pressure of the working fluid but variations in the low pressure of the working fluid are quickly sensed, whereby the controllability in releasing the abnormally high pressure is enhanced, making it possible to further improve the reliability of the waste heat utilization device.

In the waste heat utilization device according to claim 10, the accommodation chamber is open to the atmosphere, and when the force exerted on the valve element by the high pressure of the working fluid in the inlet port is larger than the sum of the force exerted by the atmospheric pressure and the pushing force exerted by the spring, the spring mechanism allows the inflow of the working fluid from the inlet port and connects the inlet port to the bypass passage. Thus, the abnormally high pressure in the high-pressure path section can be released only in accordance with the absolute pressure in the inlet port, namely, only in accordance with the high pressure of the working fluid (absolute pressure control). Thus, by determining the preset pressure for opening the inlet port to a value smaller than or equal to an allowable maximum design pressure of the fluid machine, the high-pressure path section and the Rankine circuit, it is possible to more reliably protect the expansion unit, the Rankine circuit and thus the waste heat utilization device, further enhancing the reliability of the waste heat utilization device.

In the waste heat utilization device according to claim 11, the valve element is a ball valve element or a rotary valve element and is rotated by the predetermined drive source.

### Brief Description of the Drawings

FIG. 1 schematically illustrates the configuration of a waste heat utilization device for a motor vehicle according to a first embodiment.
FIG. 2 is a schematic longitudinal sectional view of a fluid machine applied to the device of FIG. 1.
FIG. 3(a) is a longitudinal sectional view illustrating an operating state of a valve mechanism shown in FIG. 2 during a high pressure holding operation of a Rankine circuit, and FIG. 3(b) is a longitudinal sectional view illustrating an operating state of the valve mechanism in FIG. 2 during an abnormally high pressure releasing operation of the Rankine circuit.
FIG. 4(a) is a longitudinal sectional view illustrating an operating state of a valve mechanism according to a second embodiment during the high pressure holding operation of the Rankine circuit, and FIG. 4(b) is a longitudinal sectional view illustrating an operating state of the valve mechanism of the second embodiment during the abnormally high pressure releasing operation of the Rankine circuit.
FIG. 5(a) is a schematic longitudinal sectional view of a fluid machine according to a third embodiment, and FIG. 5(b) schematically illustrates the fluid machine as viewed from the direction indicated by an arrow A in FIG. 5(a).
FIG. 6(a) is a longitudinal sectional view illustrating an operating state of a valve mechanism shown in FIG. 5 during a normal operation of the Rankine circuit, and FIG. 6(b) is a schematic cross-sectional view of the valve mechanism taken along line B-B in FIG. 6(a).
FIG. 7(a) is a longitudinal sectional view illustrating an operating state of the valve mechanism shown in FIG. 5 during the high pressure holding operation of the Rankine circuit, and FIG. 7(b) is a schematic cross-sectional view of the valve mechanism taken along line B-B in FIG. 7(a).
FIG. 8(a) is a longitudinal sectional view illustrating an operating state of the valve mechanism shown in FIG. 5 during the abnormally high pressure releasing operation of the Rankine circuit, and FIG. 8(b) is a schematic cross-sectional view of the valve mechanism taken along line B-B in FIG. 8(a).
FIG. 9(a) is a longitudinal sectional view illustrating an operating state of the valve mechanism shown in FIG. 5 during a bypassing operation of the Rankine circuit, and FIG. 9(b) is a schematic cross-sectional view of the valve mechanism taken along line B-B in FIG. 9(a).

### Mode of Carrying out the Invention

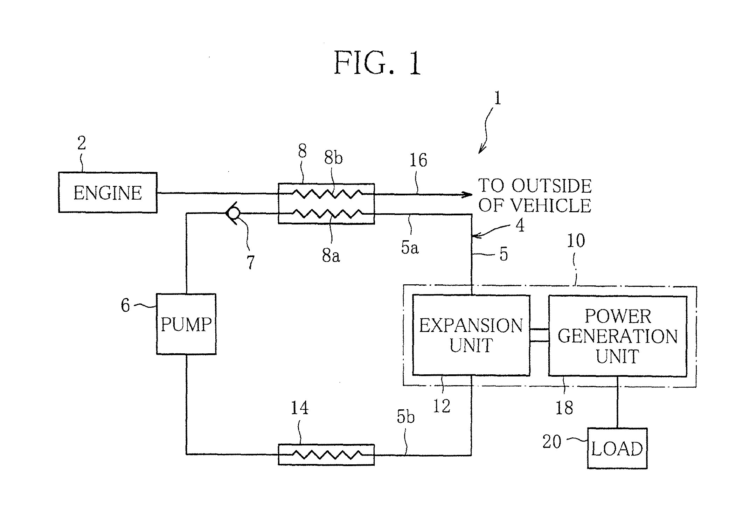

FIG. 1 illustrates a waste heat utilization device 1 for a motor vehicle according to a first embodiment. The waste heat utilization device 1 recovers heat from, for example, the exhaust gas emitted from an engine (internal combustion engine) 2 of the vehicle. To this end, the waste heat utilization device 1 is equipped with a Rankine circuit 4 having a circulation path 5 for circulating a working fluid (heat medium) therethrough. The circulation path 5 is constituted by tubing or piping, for example.

A pump 6 is inserted in the circulation path 5 to move the working fluid. Further, a check valve 7, a heater 8, an expansion unit 12 of a fluid machine 10, and a condenser 14 are sequentially arranged downstream of the pump 6 as viewed in the flowing direction of the working fluid. The pump 6 sucks in the working fluid from the circulation path extending from the condenser 14, then pressurizes the working fluid to high pressure, and discharges the high-pressure working fluid to the heater 8. The working fluid discharged from the pump 6 is in a low-temperature, high-pressure liquid state.

The heater 8, which is a heat exchanger, has a low-temperature passage 8a forming part of the circulation path 5 and a high-temperature passage 8b capable of transferring heat therefrom to the passage 8a. The passage 8b is inserted, for example, in an exhaust pipe 16 extending from the engine 2. Thus, while passing through the heater 8, the working fluid in the low-temperature, high-pressure state receives heat from the exhaust gas (heat source) emitted from the engine 2. As a result, the working fluid is heated, turning into high-temperature, high-pressure superheated vapor.

The expansion unit 12 of the fluid machine 10 expands the working fluid in the superheated vapor state, so that the working fluid turns into high-temperature, low-pressure superheated vapor.

The condenser 14, which is a heat radiator, condenses the working fluid flowing out of the expansion unit 12, by allowing heat to transfer from the working fluid to outside air, and thus the working fluid turns into low-temperature, low-pressure liquid. More specifically, an electric fan (not shown) is arranged near the condenser 14 so that the working fluid may be cooled by the air currents produced by the electric fan or by the air flowing from the front of the vehicle. The working fluid thus cooled by the condenser 14 is again drawn into the pump 6 to be circulated through the circulation path 5.

The aforementioned expansion unit 12 is capable of not only expanding the working fluid but converting the heat energy of the working fluid into torque (rotational force). An electric power generation unit 18 is coupled to the expansion unit 12 so as to make use of the torque output from the expansion unit 12. The power generation unit 18 is connected with an electrical load 20 that uses or stores the electric power generated by the power generation unit 18, for example, a battery.

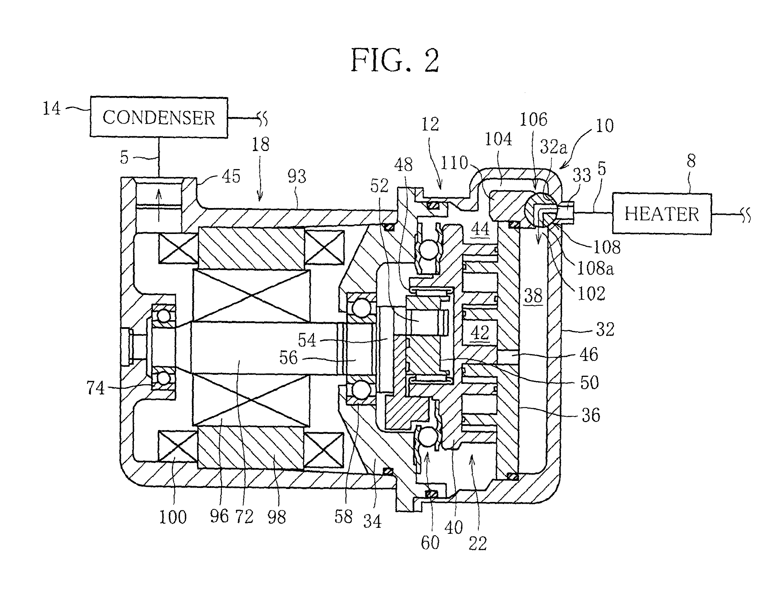

As illustrated in FIG. 2 in detail, the fluid machine 10 is constituted by the expansion unit 12 and the power generation unit 18 coupled in series with each other.

The expansion unit 12 is, for example, a scroll expander including a scroll unit 22 as a drive section. A cup-shaped casing 32 (expansion unit casing) of the expansion unit 12 has an opening almost covered with a partition wall 34, and a through hole is formed in the center of the partition wall 34.

A fixed scroll 36 is fixed inside the expansion unit casing 32, and a high-pressure chamber 38 is defined on the rear side of the fixed scroll 36. The high-pressure chamber 38 communicates with the heater 8 through an inlet port 33 formed through the expansion unit casing 32 and the part of the circulation path 5 connected to the inlet port 33.

A movable scroll 40 is arranged on the front side of the fixed scroll 36 and engages with the fixed scroll 36. An expansion chamber 42 for expanding the working fluid is defined between the fixed scroll 36 and the movable scroll 40, and a low-pressure chamber 44 for receiving the expanded working fluid is defined around the movable scroll 40. An admission hole 46 is formed through nearly the center of the base plate of the fixed scroll 36, so that the expansion chamber 42 located at the radial center of the fixed and movable scrolls 36 and 40 and the high-pressure chamber 38 communicate with each other through the admission hole 46.

The working fluid expands in the expansion chamber 42 located at the radial center of the fixed and movable scrolls 36 and 40, whereupon the volume of the expansion chamber 42 increases and also the expansion chamber 42 moves radially outward along the spiral walls of the fixed and movable scrolls 36 and 40. Finally, the expansion chamber 42 communicates with the low-pressure chamber 44, allowing the expanded working fluid to flow into the low-pressure chamber 44. The low-pressure chamber 44 communicates with the condenser 14 through an outlet port 45 and the part of the circulation path 5 connected to the outlet port 45.

As the working fluid expands, the movable scroll 40 is caused to make orbiting motion relative to the fixed scroll 36, and the orbiting motion is converted to rotary motion by a revolving mechanism.

Specifically, a boss integrally protrudes from the back of the base plate of the movable scroll 40, and an eccentric bushing 50 is relatively rotatably fitted in the boss with a needle bearing 48 therebetween. A crankpin 52 projecting eccentrically from a disk 54 is inserted into the eccentric bushing 50. A shaft portion 56 integrally and coaxially projects from a side of the disk 54 opposite the crankpin 52 and is rotatably supported by the partition wall 34 with a radial bearing 58 such as a ball bearing interposed therebetween. Thus, the orbiting motion of the movable scroll 40 is converted to rotary motion of the shaft portion 56.

In order to receive thrust and at the same time prevent the orbiting movable scroll 40 from rotating on its axis, the revolving mechanism has a ball coupling 60, for example. The ball coupling 60 is arranged between an outer peripheral portion of the base plate of the movable scroll 40 and a portion of the partition wall 34 facing the outer peripheral portion of the movable scroll 40.

The power generation unit 18 has a cylindrical casing (power generation unit casing) 93 abutting against the partition wall 34. The expansion unit casing 32, the partition wall 34 and the power generation unit casing 93 are coupled together to constitute a housing for the fluid machine 10.

A drive shaft 72 of the power generation unit 18 has one end formed integrally with the shaft portion 56, extending up to the through hole in the partition wall 34 and rotatably supported by the partition wall 34 with a radial bearing 58 therebetween. The other end of the drive shaft 72 is rotatably supported by means of a radial bearing 74 fixed to a bottom of the expansion unit casing 32. Thus, motive power can be transmitted from the shaft portion 56 to the drive shaft 72, so that the shaft portion 56 and the drive shaft 72 rotate together with each other.

A rotor 96 is fixed on a portion of the drive shaft 72 extending within the power generation unit casing 93. The rotor 96 comprises a permanent magnet, for example, and is disposed coaxially with the shaft portion 56.

A stator is fixed on an inner peripheral surface of the power generation unit casing 93 so as to surround the rotor 96. The stator includes a yoke 98 and three coil windings 100, for example, wound around the yoke 98.

The coils 100 are so wired as to generate a three-phase alternating current as the rotor 96 rotates, the generated alternating current being supplied to the external load 20 via a lead wire, not shown.

Since the power generation unit 18 is not expected to function as an electric motor, the shape of the yoke 98, the number of turns of each coil 100, and the like are suitably selected to achieve high power generation efficiency.

The fluid machine 10 configured in this manner is provided, in its housing, with a communication passage 102 allowing the inlet port 33 to communicate with the expansion unit 12 through the high-pressure chamber 38 and the admission hole 46, a bypass passage 104 for guiding the working fluid from the inlet port 33 to the outlet port 45 while bypassing the expansion unit 12, and a valve mechanism 106 allowing the inlet port 33 to selectively communicate with the communication passage 102 and the bypass passage 104.

Specifically, the valve mechanism 106 is, for example, a ball valve having a ball 108 as a valve element. The ball 108 is rotatably supported in a gastight fashion between a supporting portion 110 supporting the fixed scroll 40 and an inner surface 32a of the expansion unit casing 32 in which the inlet port 33 opens, with a valve seat or the like interposed therebetween.

An L-shaped passage 108a for the working fluid extends through the ball 108, and as the ball 108 is rotated by a drive shaft, not shown, of the valve mechanism 106, the valve mechanism 106 allows the inlet port 33 to communicate selectively with the communication passage 102 or the bypass passage 104 via the passage 108a. The drive shaft is driven, for example, by an electromagnetic valve (drive source) which is operated by an ECU (Electronic Control Unit), not shown, for controlling the entire device 1.

In the following, the operation of the valve mechanism 106 will be explained along with the operation of the fluid machine 10 and of the Rankine circuit 4.

### <Normal Operation>

When the Rankine circuit 4 is started by the ECU, the ball 108 is rotated to a position such that the inlet port 33 communicates with the communication passage 102 only, as illustrated in FIG. 2. As a result, the valve mechanism 106 allows the working fluid to flow from the heater 8 into the high-pressure chamber 38 as indicated by an arrow, so that the expansion unit 12 operates, causing the shaft portion 56 to rotate together with the drive shaft 72.

As the drive shaft 72 rotates, the rotor 96 of the power generation unit 18 also rotates, with the result that an alternating current is generated by the power generation unit 18. The generated alternating current is supplied to the load 20 to be appropriately stored therein or consumed thereby.

### <High pressure Holding Operation>

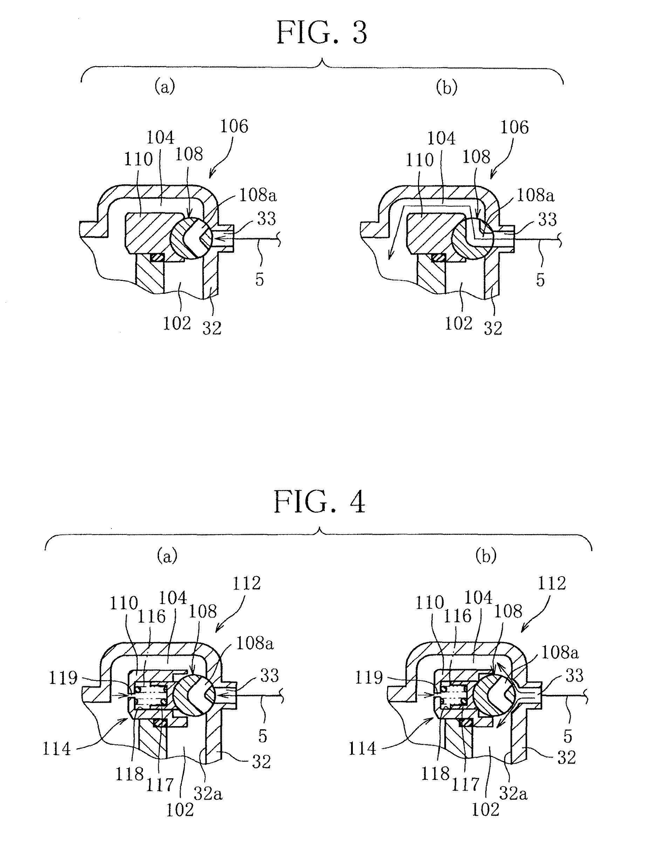

When the operation of the Rankine circuit 4 is stopped by the ECU, the ball 108 is rotated to a position where the inlet port 33 communicates with neither the communication passage 102 nor the bypass passage 104, as illustrated in FIG. 3(a). That is, the ball 108 blocks the inlet port 33, so that the introduction of the working fluid from the heater 8 into the high-pressure chamber 38 is prevented by the valve mechanism 106. At this time, the backflow of the working fluid from the heater 8 toward the pump 6 is prevented by the check valve 7. Accordingly, a high-pressure path section 5a in which high pressure of the working fluid is accumulated is created (pressure holding means) within a range of the circulation path 5 ranging from the check valve 7 to the expansion unit 12 through the passage 8a. On the other hand, a low-pressure path section 5b in which low pressure of the working fluid prevails is created within a range of the circulation path 5 ranging from the outlet port 45 to the check valve 7 through the condenser 14.

While the Rankine circuit 4 is in operation, a pressure drop of the working fluid in the high-pressure path section 5a is detected by the ECU. If the detected pressure of the working fluid becomes lower than a predetermined appropriate pressure (second preset pressure), for example, the ball 108 blocks the inlet port 33, as shown in FIG. 3(a), so that the working fluid pressure in the high-pressure path section 5a is accumulated until the appropriate pressure is reached. On the other hand, if the pressure of the working fluid in the high-pressure path section 5a becomes higher than or equal to another predetermined appropriate pressure (third preset pressure), the ball 108 is rotated to the position illustrated in FIG. 2, so that the inlet port 33 communicate with the communication passage 102 only. The working fluid pressure at and above which the inlet port 33 is connected to the communication passage 102 is set to a value equal to or higher than that at and above which the working fluid pressure is accumulated in the high-pressure path section 5a. Thus, since a hysteresis, or a dead zone, is provided between the preset pressure at and above which the working fluid pressure is accumulated and the preset pressure at and above which the inlet port 33 is connected to the communication passage 102, hunting of the valve mechanism 106 can be satisfactorily prevented.

### <Abnormally High Pressure Releasing Operation>

If, while the operation of the Rankine circuit 4 is stopped or during the high pressure holding operation of the Rankine circuit 4, an abnormally high pressure in the high-pressure path section 5a higher than or equal to a preset pressure (first preset pressure) is detected by the ECU, the ball 108 is rotated to a position where the inlet port 33 is connected to the bypass passage 104, as illustrated in FIG. 3(b). Consequently, the inlet port 33 is no longer blocked by the ball 108, and the valve mechanism 106 allows the working fluid in the high-pressure path section 5a to flow into the bypass passage 104, as indicated by an arrow, so that the pressure in the high-pressure path section 5a is released to the low-pressure path section 5b through the outlet port 45. The first preset pressure is set to be higher than the aforementioned appropriate pressures mentioned with reference to the high pressure holding operation.

### <Restarting Operation>

If, while the Rankine circuit 4 is stopped with the high pressure stored in the high-pressure path section 5a, the Rankine circuit 4 is restarted by the ECU, the ball 108 is rotated from the position where the inlet port 33 is blocked by the ball 108, as illustrated in FIG. 3(a), to the position where the inlet port 33 is connected to the communication passage 102, as illustrated in FIG. 2, whereby the pressure in the high-pressure path section 5a is released to the communication passage 102. The released pressure of the working fluid drives the expansion unit 12 to rotate the drive shaft 72. As the drive shaft 72 is rotated, the rotor 96 of the power generation unit 18 rotates, so that the power generation unit 18 generates an alternating current. The alternating current is supplied to the load 20 to be appropriately stored therein or consumed thereby.

As described above, in the waste heat utilization device 1 of the first embodiment, the fluid machine 10 is equipped with the single valve mechanism 106 which functions as three different valves, namely, a shutoff valve for accumulating the working fluid pressure in the high-pressure path section 5a while the Rankine circuit 4 is stopped, a pressure regulating valve for regulating the working fluid pressure in the high-pressure path section 5a so that the pressure may not become abnormally high, and a bypass valve for releasing the abnormally high pressure developed in the high-pressure path section 5a. This permits the fluid machine 10, the Rankine circuit 4 and thus the waste heat utilization device 1 to be reduced in size and cost while at the same time preventing abnormally high pressure from being developed in the Rankine circuit 4 and also improving the starting performance of the Rankine circuit 4.

While the Rankine circuit 4 is stopped, the working fluid pressure is accumulated in the high-pressure path section 5a while at the same time is prevented from becoming abnormally high. When the Rankine circuit 4 is restarted thereafter, the working fluid pressure accumulated in the high-pressure path section 5a is utilized to start the Rankine circuit 4, whereby the starting performance of the Rankine circuit can be improved.

Further, the working fluid pressure is accumulated in the high-pressure path section 5a until the appropriate pressure is reached, and when the working fluid pressure becomes equal to the appropriate pressure, the high-pressure path section 5a is connected to the communication passage 102. Accordingly, the pressure of the working fluid circulated through the Rankine circuit 4 can be kept at an appropriate high level in the high-pressure path section 5a.

Furthermore, the valve mechanism 106 allows the inlet port 33 to communicate with the bypass passage 104 to release the abnormally high pressure of the working fluid. Thus, the abnormally high pressure of the working fluid is prevented from flowing into the communication passage 102 and driving the scroll unit 22 at high speed as a result, whereby seizure of the scroll unit 22 due to such high-speed operation can be avoided. It is therefore possible to reliably protect the expansion unit 12, the Rankine circuit 4 and thus the waste heat utilization device 1, improving the reliability of the waste heat utilization device 1.

FIGS. 4(a) and 4(b) schematically illustrate the construction of a valve mechanism 112 according to a second embodiment. In the figures, identical reference numerals are used to denote elements identical with those of the valve mechanism 106 of the first embodiment, and description of such elements is omitted.

The valve mechanism 112 further includes a spring mechanism 114 supporting the ball 108. The spring mechanism 114 pushes the ball 108 against the high pressure of the working fluid in the high-pressure path section 5a, to block and allow the inflow of the working fluid from the inlet port 33.

The spring mechanism 114 has a spring 116 that exerts a pushing force on the ball 108, and the spring 116 transmits its pushing force to the ball 108 through a cylindrical seat 117 with which the ball 108 is disposed in contact.

Also, an accommodation chamber 118 is formed inside the supporting portion 110 in a manner such that the chamber 118 is sealed in a gastight fashion with respect to the inlet port 33 and the high-pressure chamber 38. The spring 116 and the seat 117 are accommodated in the accommodation chamber 118. The accommodation chamber 118 has a pressure introducing hole 119 opening into the bypass passage 104 so that the low pressure of the working fluid may prevail in the interior of the accommodation chamber 118. Namely, the accommodation chamber 118 communicates with the outlet port 45.

In the following, only the abnormally high pressure releasing operation of the valve mechanism 112, in which the pressure in the high-pressure path section 5a is released, will be explained along with the operation of the fluid machine 10 and of the Rankine circuit 4.

### <Abnormally High Pressure Releasing Operation>

When a force Fhp exerted on the ball 108 by the high-pressure working fluid in the inlet port 33 becomes larger than the sum of a force Flp exerted by the low-pressure working fluid on the side of the outlet port 45 and the pushing force Fs of the spring 116 due to abnormally high pressure developed in the high-pressure path section 5a, the ball 108 is pushed away from the inner surface 32a, as illustrated in FIG. 4(b), with the result that the inlet port 33 opens. Consequently, the valve mechanism 112 allows the working fluid in the high-pressure path section 5a to flow into the communication passage 102 and the bypass passage 104, as indicated by arrows, whereby the pressure in the high-pressure path section 5a is released to the low-pressure path section 5b through the outlet port 45.

As described above, in the waste heat utilization device 1 of the second embodiment, the valve mechanism 112 includes the spring mechanism 114, and the accommodation chamber 118 of the spring mechanism 114 communicates with the outlet port 45. Thus, the valve mechanism 112 can be made to function as both of a selector valve for selectively connecting the inlet port to the communication passage 102 and the bypass passage 104, and a safety valve which operates mechanically without the need for input signals from the ECU.

Also, abnormally high pressure in the high-pressure path section 5a can be released in accordance with the pressure difference between the pressure in the inlet port 33 and the pressure in the outlet port 45, that is, the pressure difference between the high and low pressures of the working fluid (relative pressure control). Thus, in the second embodiment, the valve mechanism 112 can be operated mechanically without the need for input signals from the ECU, and also the control response to abnormally high pressure can be enhanced by quickly sensing not only the variations in the high pressure of the working fluid but the variations in the low pressure of the working fluid. The reliability of the waste heat utilization device 1 can therefore be further improved.

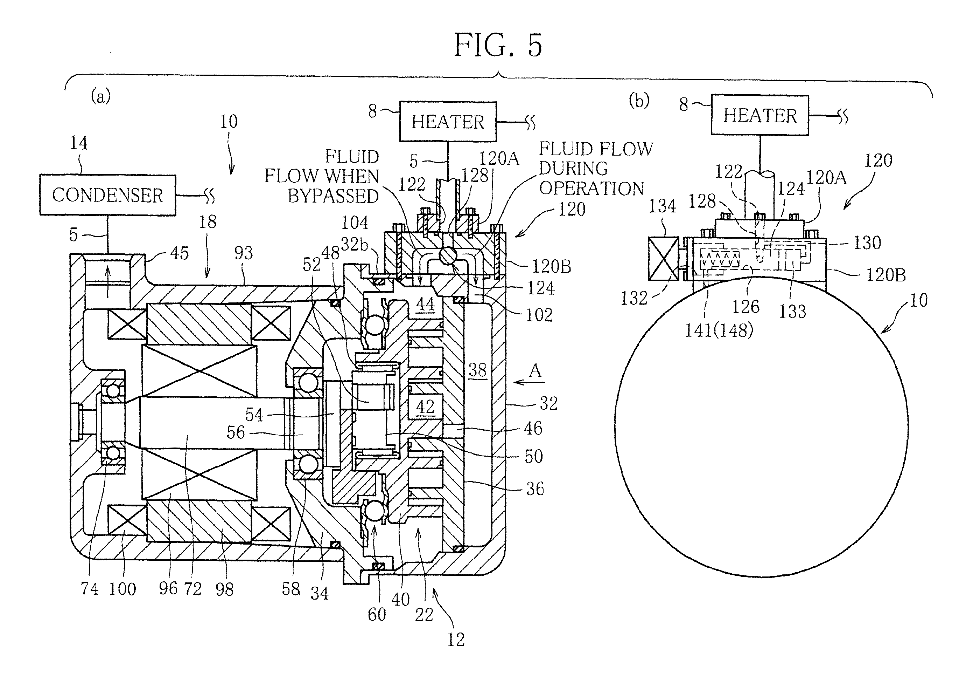

FIGS. 5(a) and 5(b) illustrate a fluid machine 10 according to a third embodiment. In the figures, identical reference numerals are used to denote elements identical with those of the fluid machines 10 of the first and second embodiments, and description of such elements is omitted.

A valve unit 120 is attached to an outer surface 32b of the expansion unit casing 32 of the fluid machine 10. The valve unit 120 is constituted by two blocks 120A and 120B.

The block 120A, to which the circulation path 5 is connected, has a first passage 122 formed therethrough in communication with the circulation path 5. The block 120A is fastened to the block 120B by screws.

On the other hand, the block 120B has an accommodation hole 126 formed therein for accommodating a valve mechanism 124 of this embodiment. A second passage 128 communicates with the accommodation hole 126, and when the blocks 120A and 120B are fastened together, the first and second passages 122 and 128 are connected to each other in a gastight fashion. In other words, the passages 122 and 128 form the inlet port 33.

A pressure introducing passage 130 branches off from the second passage 128 and opens in an innermost portion 133 of the accommodation hole 126 in the block 120B located opposite a main opening 132 into which the accommodation hole 126 opens. The accommodation hole 126 communicates further with the communication passage 102 and the bypass passage 104.

An electromagnetic valve (drive source) 134 is fastened to the block 120B by screws in a gastight fashion so as to cover the main opening 132 with a housing thereof.

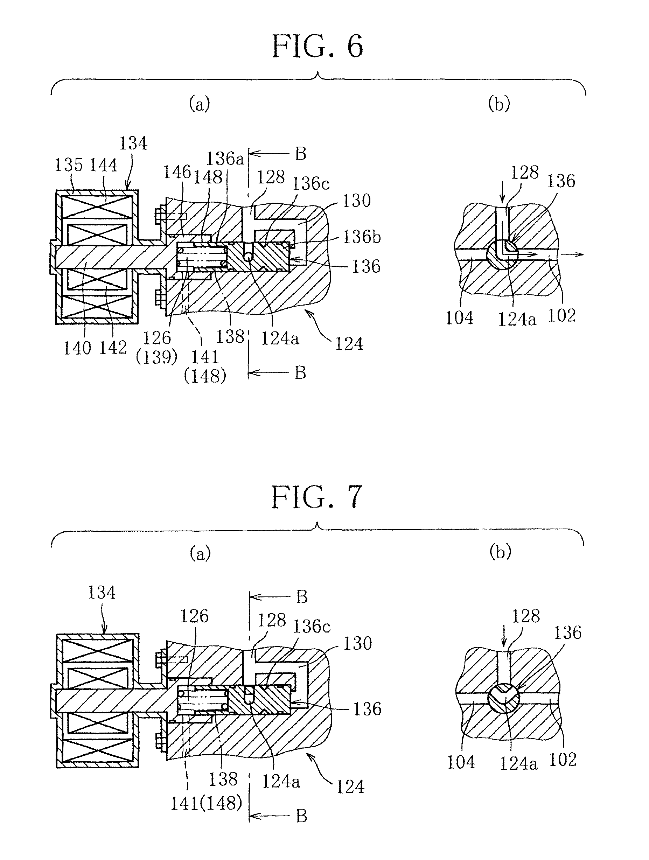

More specifically, as illustrated in FIGS. 6(a) and 6(b), the valve mechanism 124 is constituted by a valve element 136 and a spring 138.

The valve element 136 is a piston-shaped rotary valve element having a hollow cylindrical portion 136a and a head portion 136b. Between the cylindrical portion 136a and the head portion 136b, an L-shaped radial passage 124a is formed through the valve element 136, and an annular groove 136c is formed in the outer peripheral surface of the valve element 136 so as to be located closer to the head portion 136b than the passage 124a.

The housing 135 of the electromagnetic valve 134 accommodates a drive shaft 140, a rotor 142 fixed on the drive shaft 140 and constituted by a permanent magnet, for example, and a stator 144 fixed to the inner peripheral surface of the housing 135 so as to surround the rotor 142. The stator 144 has a coil wound around a yoke, and the coil winding is connected to the ECU by a lead wire to be supplied with electric current as needed.

A boss 146, which forms part of the drive shaft 140, projects from the housing 135 of the electromagnetic valve 134. The boss 146 is received in the main opening 132 of the accommodation hole 126 and rotatably supported by the inner peripheral surface of the accommodation hole 126.

The spring 138 has one end pressed against the bottom surface of the boss 146 and the other end pressed against the bottom surface of the cylindrical portion 136a, and pushes the valve element 136 toward the innermost portion 133 of the accommodation hole 126.

The cylindrical portion 136 is fitted into the boss 146 with the outer peripheral surface of the cylindrical portion 136 engaged with the inner peripheral surface of the boss 146 by means of engaging portions 148 which are constituted, for example, by serrations extending in the axial direction of the drive shaft 140. Thus, an accommodation chamber 139 for accommodating the spring 138 is defined between the boss 146 and the cylindrical portion 136a in a manner such that the accommodation chamber 139 is sealed in a gastight fashion with respect to the accommodation hole 126 and the inlet port 33. The valve element 136 is movable in the direction in which the valve element 136 is pushed by the spring 138 accommodated in the accommodation chamber 139, and also can be rotated together with the boss 146, that is, the drive shaft 140.

In this embodiment, a low-pressure passage 141 communicating with the low-pressure chamber 44 opens into the accommodation chamber 139, so that the low-pressure working fluid flows into the accommodation chamber 139.

In the valve mechanism 124 constructed as described above, the valve element 136 is rotated clockwise or counterclockwise by the drive shaft 140 over an angular range of 90 degrees, to connect the inlet port to the communication passage 102 or the bypass passage 104 through the passage 124a. The drive shaft 140 is driven by the electromagnetic valve 134, which in turn is operated by the ECU.

The following describes the operation of the valve mechanism 124, along with the operation of the fluid machine 10 and of the Rankine circuit 4.

### <Normal Operation>

When the Rankine circuit 4 is started by the ECU, the valve element 136 is rotated to a position such that the inlet port is connected to the communication passage 102 only, as illustrated in FIGS. 6(a) and 6(b). As a result, the valve mechanism 124 allows the working fluid to flow from the heater 8 into the high-pressure chamber 38 as indicated by arrows, so that the expansion unit 12 operates. As the drive shaft 72 is rotated, the rotor 96 of the power generation unit 18 rotates, with the result that an alternating current is generated by the power generation unit 18. The alternating current is supplied to the load 20 to be stored therein or consumed thereby as the case may be.

### <High pressure Holding Operation>

When the operation of the Rankine circuit 4 is stopped by the ECU, the valve element 136 is rotated to a position where the inlet port communicates with neither the communication passage 102 nor the bypass passage 104, as illustrated in FIGS. 7(a) and 7(b). That is, the valve element 136 blocks the second passage 128, namely, the inlet port 33, so that the introduction of the working fluid from the heater 8 into the high-pressure chamber 38 is blocked by the valve mechanism 124. At this time, the backflow of the working fluid from the heater 8 toward the pump 6 is prevented by the check valve 7, and accordingly, the high-pressure path section 5a and the low-pressure path section 5b are created.

While the Rankine circuit 4 is operating, a pressure drop of the working fluid in the high-pressure path section 5a is detected by the ECU. If the detected pressure of the working fluid decreases below the predetermined appropriate pressure (second preset pressure), for example, the valve element 136 blocks the inlet port 33, as illustrated in FIGS. 7(a) and 7(b), so that the working fluid pressure is accumulated in the high-pressure path section 5a until the appropriate pressure is reached. On the other hand, if the working fluid pressure in the high-pressure path section 5a becomes higher than or equal to the other predetermined appropriate pressure (third preset pressure > second preset pressure), the valve element 136 is rotated to the position illustrated in FIGS. 6(a) and 6(b), whereby the inlet port is connected only to the communication passage 102.

### <Abnormally High Pressure Releasing Operation>

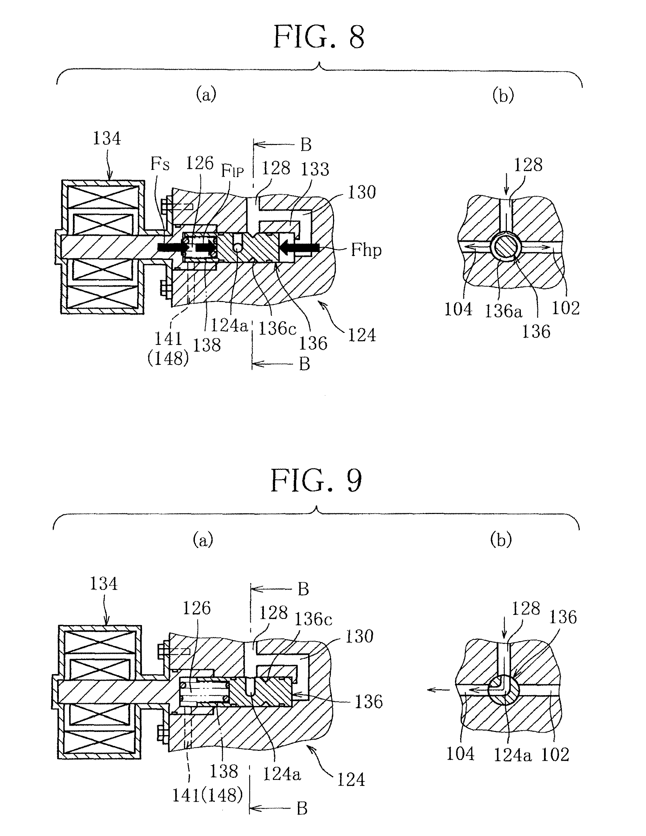

When the force Fhp exerted on the head portion 136a of the valve element 136 by the high-pressure working fluid introduced from the pressure introducing passage 130 becomes larger than the sum of the force Flp exerted by the low-pressure working fluid on the side of the outlet port 45 and the pushing force Fs of the spring 138 due to abnormally high pressure developed in the high-pressure path section 5a, the valve element 136 is moved away from the innermost portion 133 of the accommodation hole 126 toward the spring 138, as illustrated in FIGS. 8(a) and 8(b), with the result that the annular groove 136c is located in communication with the second passage 128.

Thus, the second passage 128, that is, the inlet port 33 is no longer blocked and communicates with the annular groove 136c instead. Consequently, the valve mechanism 124 allows the working fluid in the high-pressure path section 5a to flow into the communication passage 102 and the bypass passage 104, as indicated by arrows, whereby the pressure in the high-pressure path section 5a is released to the low-pressure path section 5b through the outlet port 45. Instead of the annular groove 136c which is formed in the outer peripheral surface of the valve element 136 along its entire circumference, a groove may be cut in the outer peripheral surface of the valve element 136 only over a predetermined circumferential range so that when the inlet port 33 is opened to release the high-pressure working fluid, the working fluid in the high-pressure path section 5a may be guided only to the bypass passage 104.

### <Restarting Operation>

When the Rankine circuit 4 is restarted by the ECU, the valve element 136 is rotated from the position where the inlet port 33 is blocked by the valve element 136, as illustrated in FIGS. 7(a) and 7(b), to the position where the inlet port 33 is connected to the communication passage 102, as illustrated in FIGS. 6(a) and 6(b), whereby the pressure in the high-pressure path section 5a is released to the communication passage 102. The released pressure of the working fluid drives the expansion unit 12 to rotate the drive shaft 72. As the drive shaft 72 is rotated, the rotor 96 of the power generation unit 18 rotates, so that the power generation unit 18 generates an alternating current. The generated alternating current is supplied to the load 20 to be stored therein or consumed thereby as needed.

### <Bypassing Operation>

When the pump 6 alone is started by the ECU during the initial starting operation of the Rankine circuit 4, the valve element 136 is rotated to a position where the second passage 128 is connected to the bypass passage 104, as illustrated in FIGS. 9(a) and 9(b). Accordingly, the resistance to the flow of the working fluid through the circulation path 5 is reduced, whereby the circulation amount of the working fluid can be smoothly controlled.

Also when the Rankine circuit 4 is brought to a complete stop, the valve element 136 is rotated to the position where the second passage 128 is connected to the bypass passage 104. Since, in this case, the working fluid in the high-pressure path section 5a can be guided to the low-pressure path section 5b, the working fluid pressure in the circulation path 5 as a whole can be made uniform, whereby the expansion unit 12 can be smoothly brought to a complete stop.

With the above waste heat utilization device 1 of the third embodiment, abnormally high pressure in the high-pressure path section 5a can be released mechanically according to the relative pressure control based on the pressure difference between the high and low pressures of the working fluid, like the second embodiment. It is therefore possible to enhance the control responsiveness in releasing abnormally high pressure.

In the third embodiment, the low working fluid pressure is introduced into the accommodation chamber 139 through the low-pressure passage 141. Alternatively, an atmospheric pressure passage 148 opening to the atmosphere, in place of the low-pressure passage 141, may be connected to the accommodation chamber 139 so that the accommodation chamber 139 may be open to the atmosphere.

In the following, how the valve mechanism 124 provided with the atmospheric pressure passage 148 operates to release abnormally high pressure from the high-pressure path section 5a will be described, along with the operation of the fluid machine 10 and of the Rankine circuit 4.

### <Abnormally High Pressure Releasing Operation>

When the force Fhp exerted on the head portion 136a of the valve element 136 by the high-pressure working fluid introduced from the pressure introducing passage 130 becomes larger than the sum of a force Fa exerted by the atmospheric pressure and the pushing force Fs of the spring 138 due to abnormally high pressure developed in the high-pressure path section 5a, the valve element 136 is moved away from the innermost portion 133 of the accommodation hole 126, as illustrated in FIGS. 8(a) and 8(b), with the result that the inlet port 33, which has been blocked until then, communicates with the annular groove 136c. Consequently, the valve mechanism 124 allows the working fluid in the high-pressure path section 5a to flow into both the communication passage 102 and the bypass passage 104 as indicated by the arrows, or only into the bypass passage 104, whereby the pressure in the high-pressure path section 5a is released to the low-pressure path section 5b through the outlet port 45.

In this case, the abnormally high pressure in the high-pressure path section 5a can be released only in response to the absolute pressure in the inlet port 33, namely, the working fluid pressure in the high-pressure path section (absolute pressure control). Thus, by determining the preset pressure for opening the inlet port 33 to a value smaller than or equal to an allowable maximum design pressure of the high-pressure path section 5a and the expansion unit 12, or more generally, the fluid machine 10 and the Rankine circuit 4, it is possible to more reliably protect the Rankine circuit 4 and thus the waste heat utilization device 1, further enhancing the reliability of the waste heat utilization device 1.

When the pump 6 alone is started by the ECU during the initial starting operation of the Rankine circuit 4, the valve element 136 is preferably rotated to the position illustrated in FIGS. 9(a) and 9(b), where the inlet port communicates with the bypass passage 104, regardless of whether the pressure in the high-pressure path section is abnormally high or not. This serves to lessen the resistance to the flow of the working fluid through the circulation path 5, making it possible to smoothly control the circulation amount of the working fluid.

Also, when the Rankine circuit 4 is brought to a complete stop, the valve element 136 is rotated to the position where the inlet port is connected to the bypass passage 104. Thus, the working fluid in the high-pressure path section 5a is guided to the low-pressure path section 5b, and since the working fluid pressure in the circulation path 5 as a whole can be made uniform, the expansion unit 12 can be smoothly brought to a complete stop.

The present invention is not limited to the foregoing embodiments and may be modified in various ways.

For example, the waste heat utilization device 1 described above converts the heat of the exhaust gas into electric power, but may be configured to convert the heat of the cooling water (heat source) of the engine 2 into electric power. Also, the waste heat utilization device 1 is applicable not only to motor vehicles but other devices.

Further, instead of the aforementioned fluid machine 10 constituted by the expansion unit 12 and the power generation unit 18, a fluid machine may be used which is provided with a motor generator unit, in place of the power generation unit 18, and with a pump unit serving as the pump 16, and in which the motor generator unit and the pump unit share the drive shaft 72 with the expansion unit 12.

In this case, if the pressure in the high-pressure path section 5a is not sufficiently high, electric power may be supplied from a suitable external unit when the Rankine circuit 4 is restarted, so that the motor generator unit may be operated as a motor by using the externally supplied power, to start the pump unit. After the working fluid pressure in the circulation path 5 becomes sufficiently high, part of the externally supplied power may be used to operate the pump unit while the remaining part may be used for rotating the rotor 96 of the power generation unit 18 to generate electricity.

On the other hand, if the pressure in the high-pressure path section 5a is sufficiently high, the pump unit can be started by the energy of the high-pressure working fluid. In this case, electric power need not be supplied externally to start the pump unit, saving the energy consumed by the fluid machine.

Further, instead of the aforementioned fluid machine 10, an expander not including the power generation unit 18, a fluid machine in which the output of the expander is transmitted to an internal combustion engine via a power transmission mechanism, and fluid machines with various other configurations may be used.

In the foregoing, moreover, the valve element of the valve mechanism is driven by the electromagnetic valve.

The valve element may alternatively be driven by using the pressure of the working fluid or the output of the expansion unit.

### Industrial Applicability

The present invention pertains to a cooling system which is suited for use in a room air conditioner, a refrigerator freezer, a showcase refrigerator and the like and which is capable of ensuring satisfactory lubrication and sealing performance of the compressor and effectively improving the cooling efficiency, regardless of the outside air temperature or the temperature of the refrigerant discharged from the compressor.

### Explanation of Reference Signs

- 1:: waste heat utilization device
- 4:: Rankine circuit (refrigerant circuit)
- 5:: circulation path
- 5a:: high-pressure path section
- 5b:: low-pressure path section
- 10:: fluid machine
- 12:: expansion unit
- 22:: scroll unit (drive section)
- 33:: inlet port
- 45:: outlet port
- 102:: communication passage
- 104:: bypass passage
- 106, 112, 124:: valve mechanism
- 108:: ball (valve element)
- 114:: spring mechanism
- 116, 138:: spring
- 118, 139:: accommodation chamber
- 134:: electromagnetic valve (drive source)
- 136:: valve element

## Claims

1. A fluid machine comprising, inside a housing thereof:
a drive section configured to be driven by a working fluid introduced from an inlet port of the fluid machine, and to discharge the working fluid to an outlet port of the fluid machine;
a communication passage allowing the working fluid to flow from the inlet port into the drive section;
a bypass passage allowing the working fluid to flow from the inlet port to the outlet port while bypassing the drive section; and
a valve mechanism configured to block inflow of the working fluid from the inlet port and to allow the inlet port to be connected selectively to the communication passage and the bypass passage.

2. A refrigerant circuit comprising the fluid machine of claim 1 inserted in a circulation path for circulating the working fluid.

3. A waste heat utilization device comprising, as the refrigerant circuit of claim 2, a Rankine circuit including an expansion unit inserted in the circulation path, the expansion unit being contained in the housing of the fluid machine and configured to produce drive force by causing the drive section to expand the working fluid whose pressure has been increased by waste heat of a heat source,
wherein the Rankine circuit further includes a high-pressure path section which is connected to the inlet port and in which high pressure of the working fluid circulated through the circulation path prevails, a low-pressure path section which is connected to the outlet port and in which low pressure of the working fluid circulated through the circulation path prevails, and pressure holding means for holding the pressure in the high-pressure path section, and
wherein, when the pressure holding means is in operation, the valve mechanism blocks the inflow of the working fluid from the inlet port, and when the pressure in the high-pressure path section is higher than or equal to a first preset pressure, the valve mechanism allows the inflow of the working fluid from the inlet port and connects the inlet port to the bypass passage or the communication passage.

4. The waste heat utilization device according to claim 3, wherein:
when the Rankine circuit is in operation, the valve mechanism connects the inlet port to the communication passage,
when the Rankine circuit is stopped, the valve mechanism operates the pressure holding means to block the inflow of the working fluid from the inlet port,
when the pressure in the high-pressure path section is higher than or equal to the first preset pressure, the valve mechanism allows the inflow of the working fluid from the inlet port and connects the inlet port to the bypass passage or the communication passage, and
when the Rankine circuit is restarted after being stopped, the valve mechanism connects the inlet port to the communication passage.

5. The waste heat utilization device according to claim 3 or 4, wherein:
when the Rankine circuit is in operation, the valve mechanism connects the inlet port to the communication passage,
when the pressure in the high-pressure path section is lower than a second preset pressure during the operation of the Rankine circuit, the valve mechanism operates the pressure holding means to block the inflow of the working fluid from the inlet port, and
when the pressure in the high-pressure path section is higher than or equal to a third preset pressure, the valve mechanism allows the inflow of the working fluid from the inlet port and connects the inlet port to the communication passage.

6. The waste heat utilization device according to claim 3, wherein, when the pressure in the high-pressure path section is higher than or equal to the first preset pressure, the valve mechanism allows the inflow of the working fluid from the inlet port and connects the inlet port only to the bypass passage.

7. The waste heat utilization device according to claim 3, wherein the valve mechanism includes a valve element which allows the inlet port to selectively communicate with the communication passage and the bypass passage and on which the high pressure of the working fluid in the inlet port acts, and a spring mechanism supporting the valve element and pressing the valve element against the high pressure of the working fluid, to block and allow the inflow of the working fluid from the inlet port.

8. The waste heat utilization device according to claim 7, wherein the spring mechanism includes a spring pushing the valve element, and an accommodation chamber accommodating the spring and sealed in a gastight fashion with respect to the inlet port.

9. The waste heat utilization device according to claim 8, wherein:
the accommodation chamber communicates with the outlet port, and
when a force exerted on the valve element by the high pressure of the working fluid in the inlet port is larger than a sum of a force exerted by the low pressure of the working fluid in the outlet port and a pushing force exerted by the spring, the spring mechanism allows the inflow of the working fluid from the inlet port and connects the inlet port to the bypass passage.

10. The waste heat utilization device according to claim 8, wherein:
the accommodation chamber is open to atmosphere, and
when a force exerted on the valve element by the high pressure of the working fluid in the inlet port is larger than a sum of a force exerted by an atmospheric pressure and a pushing force exerted by the spring, the spring mechanism allows the inflow of the working fluid from the inlet port and connects the inlet port to the bypass passage.

11. The waste heat utilization device according to claim 7, wherein the valve element is a ball valve element or a rotary valve element and is rotated by a predetermined drive source.
